# EUROPÄISCHE PATENTSCHRIFT

(11) **EP 2 042 027 B1**
(45) Veröffentlichungstag und Bekanntmachung des Hinweises auf die Patenterteilung: **01.02.2017**
(21) Anmeldenummer: 08159213.1
(22) Anmeldetag: 27.06.2008
(51) Int. Cl.: A01F 15/07, A01F 15/08, A01F 15/14

(54) **Rundballenpresse**
Round baling press
Presse à ballots ronds

(30) Priorität: 27.09.2007 DE 102007046620
(43) Veröffentlichungstag der Anmeldung: 01.04.2009
(73) Patentinhaber: Usines CLAAS France S.A.S., 57148 St. Rémy/Woippy CEDEX (FR)
(72) Erfinder: Gette, Christoph, 557300 Tremery (FR); Mesmer, Denis, 57320 Bouzonville (FR); Meaux, Fabien, 57000 Metz (FR)
(74) Vertreter: Ellerbrächter, Dirk

(56) Entgegenhaltungen:
- EP-A- 1 397 954
- EP-B1- 1 008 292
- WO-A-97/03550
- GB-A- 2 138 354
- US-A- 4 389 930
- US-A- 4 731 984
- US-A- 5 551 218
- US-A1- 2005 247 215

## Beschreibung

Die vorliegende Erfindung betrifft eine Rundballenpresse mit wenigstens zwei eine Presskammer begrenzenden und gegeneinander in einem Freiheitsgrad bewegbaren Ballenformungselementen. Eine solche Rund-Ballenpresse ist z.B. aus DE 298 14 775 U1 bekannt.

Die Ballenformungselemente dieser bekannten Rundballenpresse sind Walzen beziehungsweise Gruppen von Walzen. Es können bei dieser bekannten Rundballenpresse mehrere Gruppen von Walzen unterschieden werden. So können beispielsweise die in einer vorderen Gehäusehälfte montierten Walzen zu einer ersten und die in einer hinteren, zum Auswerfen eines Ballens gegen die vordere Gehäusehälfte schwenkbarren hinteren Gehäusehälfte montierten Walzen zu einer zweiten Gruppe gerechnet werden, oder unter den Walzen der hinteren Gehäusehälfte kann zwischen der Gruppe der Walzen, deren Achsen in Bezug auf die hintere Gehäusehälfte fest sind, und der Gruppe derjenigen unterschieden werden, die von einem in Bezug auf die Gehäusehälfte schwenkbaren Rahmen gehalten sind. Indem die Walzen dieses Rahmens zur vorderen Gehäusehälfte hin geschwenkt werden, kann ein zwischen den Walzen gebildeter Pressraum verkleinert werden, was die Ballenbildung in einer Anfangsphase erleichtert und das Pressen von Ballen mit gleichmäßig hoher Dichte ermöglicht.

Aus der US 2005/247215A1 ist eine Rundballenpresse mit einem Ballenpressraum und einer im rückwärtigen Bereich des Ballenpressraums angeordneten Tür bekannt, die entlang eines Weges zwischen einer Schließposition und einer Öffnungsposition beweglich ist, in welcher ein fertiggestellter Ballen aus dem Ballenpressraum auswerfbar ist, wobei ein Sensor zur Bereitstellung einer Information über die jeweilige Position der Tür entlang des Weges vorgesehen ist.

Während der Erzeugung eines Ballens wird der schwenkbare Rahmen in dem Maße nach außen gedrängt, wie der Ballen in der Presskammer wächst. Dabei wächst zunächst auch kontinuierlich die von einer Feder auf den Rahmen ausgeübte Rückstellkraft. Wenn jedoch der Rahmen eine äußere Anschlagstellung erreicht, in der er nicht weiter zurückweichen kann, nimmt die Presskraft bei weiterer Zufuhr von Pressgut zum Ballen abrupt zu. Unter ungünstigen Umständen kann dies dazu führen, dass der Ballen nicht mehr gedreht und folglich auch nicht mehr geschnürt oder umwickelt werden kann. Wenn in einem solchen Fall der Ballen ungeschnürt bzw. ungewickelt ausgeworfen werden muss, zerfällt er, und das gesamte Pressgut muss erneut aufgenommen und zu einem Ballen geformt werden. Ein Benutzer muss daher genau darauf achten, dass dem Ballen nicht mehr Pressgut zugeführt wird, als die Presskammer zu fassen vermag.

Aufgabe der Erfindung ist, eine Rundballenpresse zu schaffen, bei der die Gefahr einer Überfüllung verringert oder gar ausgeräumt ist.

Die Aufgabe wird erfindungsgemäß durch die Merkmale von Anspruch 1 gelöst. Basierend auf dem Erfassungsergebnis des Sensors zum Erfassen der Relativposition der Walzen zueinander kann - manuell oder automatisch, in die Rundballenpresse integriert oder außerhalb von dieser - eine Überwachung des Füllungszustandes der Rundballenpresse stattfinden, die es ermöglicht, den Ballen rechtzeitig zu umwickeln.

Häufig sind die Walzen durch ein

Gelenk miteinander schwenkbar verbunden, so dass der Sensor zweckmäßigerweise ein dem Gelenk zugeordneter Winkelsensor sein kann. Dabei kann der Sensor ein binäres oder auch ein quantitatives Ausgangssignal liefern.

Einem ersten Grundkonzept der Erfindung zufolge sind die von dem Sensor überwachten Walzen in zwei zum Ausgeben eines Ballens gegeneinander schwenkbaren Gehäuseteilen angeordnet, und das Gelenk verbindet die beiden Gehäuseteile miteinander.

Einem zweiten Grundkonzept zufolge kann zwar die Rundballenpresse zwei zum Ausgeben eines Ballens gegeneinander schwenkbare Gehäuseteile umfassen, doch sind die zwei von dem Sensor überwacht gegeneinander bewegbaren Walzen in einem der beiden Gehäuseteile angeordnet.

Selbstverständlich sind die beiden Grundkonzepte auch in der Weise miteinander kombinierbar, dass die Ballenpresse drei gegeneinander bewegbare Ballenformungselemente, zwei in einem ersten Gehäuseteil und eines in einem gegen den ersten Gehäuseteil schwenkbaren zweiten Gehäuseteil aufweist, und das zwei Sensoren zur Erfassung der Relativpositionen der Ballenformungselemente vorgesehen sind.

Um eine Überladung zu vermeiden, sind zweckmäßigeweise Mittel vorgesehen, um die Gutzufuhr zu der Presskammer zu stoppen, wenn die Relativposition eine vorgegebene Grenzposition überschreitet. In diesem Zusammenhang sei darauf hingewiesen, dass hier unter einer Rundballenpresse sowohl eine Rundballenpresse klassischer Bauart verstanden werden kann, die üblicherweise an eine Zugmaschine angekoppelt wird, um von dieser über ein zu beerntendes Feld oder eine Wiese gezogen zu werden, als auch die Kombination einer solchen Rundballenpresse im engeren Sinne mit der ihr zugeordneten Zugmaschine, so dass es für die Erfindung nicht darauf ankommt, ob die Mittel zum Stoppen der Gutzufuhr in der Ballenpresse im engeren Sinne oder in der Zugmaschine implementiert sind. So kann es sich zum Beispiel bei diesen Mitteln um eine Steuereinheit der Rundballenpresse im engeren Sinne handeln, die bei Überschreitung der Grenzposition einen Pickup der Ballenpresse stoppt, so dass kein Pressgut mehr aufgenommen wird, oder um eine Steuereinheit der Zugmaschine, die letztere zum Stehen bringt, was ebenfalls dazu führt, dass kein Pressgut mehr aufgenommen werden kann.

Ein Pressdruckregelsystem zum Regeln des von den Ballenformungselementen auf den Ballen ausgeübten Drucks ist an den Sensor gekoppelt, um unterschiedliche Preßdrücke einzustellen, je nachdem, ob die Relativposition eine vorgegebene Grenzposition überschreitet oder nicht.

Insbesondere kann das Pressdruckregelsystem ausgelegt sein, bei Überschreitung der Grenzposition den Pressdruck zu reduzieren, so dass der Ballen leichter gedreht werden kann und ohne Schwierigkeiten mit Hüllmaterial umwickelt werden kann.

Das Pressdruckregelsystem umfasst vorteilhafterweise wenigstens einen zwischen den zwei Ballenformungselementen wirkenden Hydraulikkolben sowie Mittel zum Regeln des in dem Hydraulikkolben herrschenden Drucks anhand der von dem Sensor erfassten Relativposition. Anders als zum Beispiel eine Feder erlaubt ein Hydraulikkolben, die Presskraft willkürlich in Abhängigkeit von der vom Sensor erfassten Relativposition einzustellen, so dass zum einen ein Pressballen von optimal homogener Dichte erhalten und andererseits die Presskraft bei Überschreitung der Grenzposition auf einfache Weise reduziert werden kann, um das Umhüllen des Ballens zu erleichtern.

Die Walzen sind insbesondere jeweils mehrere in einem Rahmen drehbar gehaltene Presswalzen.

Wenn die Rundballenpresse einen Fahrantrieb und eine Fahrerkanzel umfasst, ist zweckmäßigerweise an der Fahrerkanzel eine Anzeigerichtung für ein Ausgangssignal des Sensors vorgesehen. So kann der Fahrer die Position der Ballenformungselemente fortlaufend überwachen und, sofern dies nicht von einer automatischen Steuereinheit erledigt wird das Umwickeln des fertigen Ballens oder eine Anpassung der Presskraft manuell auslösen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht einer Ballenpresse gemäß einer ersten Ausgestaltung der vorliegenden Erfindung.
- Fig. 2 und 3: jeweils schematische Darstellungen der hinteren Gehäusehälfte einer Ballenpresse gemäß einer zweiten Ausgestaltung der Erfindung.

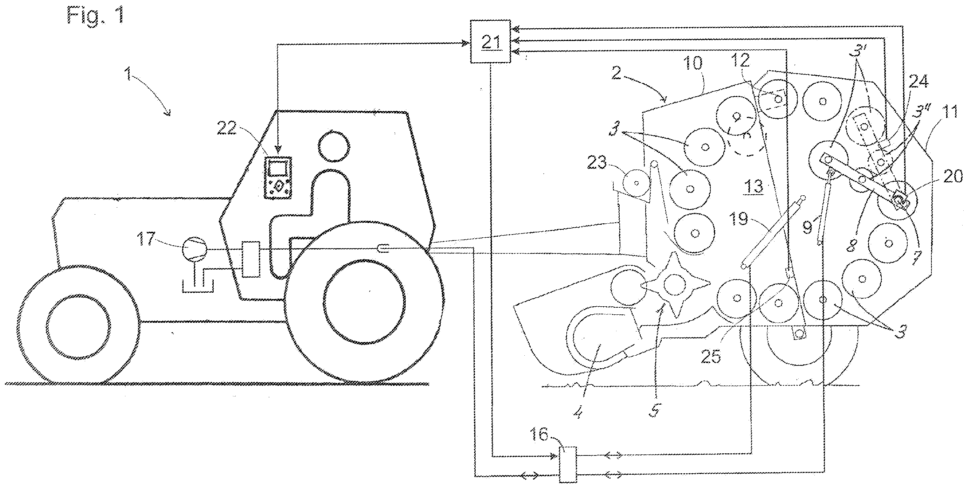

Fig. 1 zeigt in einer schematischen Seitenansicht ein Gespann aus einer Zugmaschine 1 und einer von dieser gezogenen und angetriebenen Ballenpresse 2. Bei dieser Anordnung sind einige für den Betrieb der Ballenpresse 2 erforderliche Funktionseinheiten, insbesondere für Antrieb und Steuerung, in der Zugmaschine 1 enthalten; es wird dem Fachmann jedoch keine Schwierigkeiten bereiten, die im Folgenden gegebenen Erläuterungen auch auf eine selbst fahrende Ballenpresse anzuwenden oder das in Fig. 1 gezeigte Gespann als solches als eine Ballenpresse im weiteren Sinne aufzufassen.

Ein Gehäuse der Ballenpresse 2 umfasst im Mesentlichen zwei Gehäuseteile, ein vorderes 10 und ein hinteres 11, die an ihren Oberseiten durch ein Scharnier 12 schwenkbar verbunden sind. In den Gehäuseteilen 10, 11 drehbar aufgehängte Walzen 3, 3', 3" begrenzen eine Presskammer 13. Im hinteren Gehäuseteil 11 sind zwei dieser Walzen, mit 3' bzw. 3" bezeichnet, in einem relativ zu dem hinteren Gehäuseteil 11 um eine Achse 7 schwenkbaren Rahmen 8 gehalten. Der Rahmen 8 ist, angetrieben von einem hydraulischen Stellglied 9, zwischen einer in der Fig. 1 mit durchgezogenen Linien dargestellten, in die Presskammer 13 hinein ragenden Stellung und einer durch strichpunktierte Linien dargestellten Stellung schwenkbar, in der die Walzen 3', 3" zusammen mit den anderen Walzen 3 in etwa auf einem Kreis rings um die Presskammer 13 liegen.

Die Presskammer 13 wird mit von einem Feld aufgenommenem Erntegut über eine Pickup-Trommel 4, gegebenenfalls nach Durchlaufen einer Schneideinrichtung 5, beschickt. In seiner in die Presskammer 13 hinein geschwenkten Stellung verkleinert der Rahmen 8 effektiv die Presskammer 13 und erleichtert so den Beginn der Ballenbildung aus dem zugeführten Erntegut. Die Walzen 3, 3', 3" sind im Uhrzeigersinn drehangetrieben, so dass der Ballen im Gegenuhrzeigersinn rotiert. Mit fortschreitendem Wachstum des Ballens wird der Rahmen 8 entgegen der Kraft des Stellgliedes 9 immer weiter nach außen, in Richtung der strichpunktiert dargestellten Stellung, gedrängt. Durch Regelung von Zufuhr bzw. Abfluss von Hydraulikfluid zu bzw. von dem Stellglied 9 an einem Wegeventil 16 kann die Andrückkraft der Walzen 3', 3" gegen den Ballen während der gesamten Ballenbildung konstant gehalten oder auf andere geeignete Weise geregelt werden, um einen homogen dichten Ballen guter Qualität zu erhalten. Druckquelle für das Hydraulikfluid ist im hier dargestellten Fall eine Hydraulikpumpe 17 in der Zugmaschine 1; selbstverständlich kann alternativ auch eine Hydraulikpumpe in der Ballenpresse 2 selbst vorgesehen und genauso wie deren Walzen 3, 3', 3", die Pickup-Trommel 4 und die Schneideinrichtung 5 über eine Zapfwelle vom Motor der Zugmaschine 1 angetrieben sein. Die Zapfwelle ist, da an sich bekannt, in Fig. 1 der Übersichtlichkeit halber nicht dargestellt.

Ein zweites, unabhängig vom ersten Stellglied 9 über das Wegeventil 16 versorgtes Stellglied 19 greift an den beiden Gehäuseteilen 10, 11 an, um diese während der Ballenbildung geschlossen zu halten und zum Auswerfen des fertigen Ballens auseinander zu schwenken.

Um das Zurückweichen des Rahmens 8 während der Ballenbildung zu überwachen, ist ein elektronischer Drehwinkelsensor 20 an der Achse 7 angeordnet. Der Drehwinkelsensor 20 liefert einen quantitativen Messwert des Drehwinkels des Rahmens 8 an eine elektronische Steuereinheit 21.

Einer ersten Ausgestaltung zufolge ist die Steuereinheit 21 im Wesentlichen lediglich eine Schnittstellte für den Datenaustausch mit einer Benutzerschnittstelle 22 in einer Fahrerkanzel der Zugmaschine 1. Anhand der vom Drehwinkelsensor 20 gelieferten Daten zeigt die Benutzerschnittstelle 22 dem Fahrer fortlaufend den Füllstand der Presskammer 13 an und/oder erzeugt ein Warnsignal, wenn der Füllstand ein kritisches Maß überschritten hat und der in der Presskammer gebildete Ballen umwickelt und ausgegeben werden muss. Wenn dies der Fall ist, hält der Fahrer die Zugmaschine 1 an, so dass kein weiteres Erntegut aufgenommen werden kann, und steuert einen Ballenbindevorgang, bei welchem Bindematerial, wie etwa Garn, Folie oder Netz von einem Vorrat 23 abgewickelt und als eine letzte, äußerste Lage um den fertigen Ballen herumgewickelt wird. Um diesen Wickelvorgang zu erleichtern, reduziert die Steuereinheit 21 den Druck des Hydraulikfluids im Stellglied 9, so dass der Pressdruck auf den Ballen abnimmt und der Ballen dementsprechend leichter zu drehen ist.

Einer zweiten Ausgestaltung zufolge nimmt die Steuereinheit 21 selbst eine Auswertung der von dem Drehwinkelsensor 20 gelieferten Daten vor, stoppt, wenn sie einen kritischen Füllstand der Presskammer 13 erkennt, die Zugmaschine 1 und löst den Ballenbindevorgang bei gegebenenfalls reduziertem Pressdruck wie oben beschrieben aus.

Es können auch beide Ausgestaltungen in der Weise kombiniert sein, dass bei einem ersten Füllstand der Presskammer die Benutzerschnittstelle 22 eine optische oder akustische Warnung für den Fahrer erzeugt, um ihn zum Auslösen eines Ballenbindevorgangs aufzufordern, und dass, wenn dieser die Aufforderung ignoriert, bei Überschreitung einer zweiten, geringfügig höheren Füllmenge die Steuereinheit 21 den Ballenbindevorgang automatisch auslöst.

Anstelle des quantitativen Drehwinkelsensors 20 oder ergänzend zu diesem kann auch ein qualitativ arbeitender Sensor, d.h. ein Sensor mit binärem Ausgangssignal oder Schalter 24, zur Erfassung der Stellung des Rahmens 8 eingesetzt werden, der von dem Rahmen 8 betätigt wird, wenn dieser kritisch nahe an seine in Fig.1 strichpunktiert dargestellte Stellung herankommt. Ein solcher Schalter 24 ermöglicht keine kontinuierliche Überwachung des Füllstands der Presskammer 13 während der Ballenbildung, aber zur Erzeugung eines Warnsignals für den Fahrer oder zum Auslösen eines automatischen Ballenbindevorgangs, gegebenenfalls in Verbindung mit einer Herabsetzung des Pressdruck, ist er ebenfalls geeignet.

Ein in entsprechender Weise arbeitender Schalter 25 kann auch zwischen den beiden Gehäuseteilen 10, 11 angeordnet sein, um einen Zeitpunkt im Laufe der Ballenbildung zu erfassen, in welchem der Druck des Ballens gegen die Walzen 3 beginnt, die Zuhaltekraft des Stellgliedes 19 zu überschreiten und die beiden Gehäuseteile 10, 11 auseinanderzuspreizen. Auch anhand eines diesen Zeitpunkt anzeigenden Erfassungssignals dieses Schalters 25 kann entschieden werden, dass die Presskammer voll ist und es Zeit ist, einen Ballenbindevorgang auszulösen.

Einer vereinfachten Ausgestaltung zufolge kann der oben beschriebene elektronische Sensor 20, der Schalter 24 und/oder der Schalter 25 auch jeweils durch einen mechanischen Sensor ersetzt sein, z.B. einen Seilzug, von dem ein Ende an dem Rahmen 8 bzw. dem Gehäuseteil 11 angreift, während ein anderes Ende mit einem Zeigerelement gekoppelt ist, so dass letzteres der Bewegung des Rahmens 8 bzw. des Gehäuseteils 11 folgt. Ein solches Zeigerelement ist zweckmäßigerweise an der Vorderseite des Gehäuses der Ballenpresse 2 angebracht, so dass der Fahrer es von der Fahrerkanzel aus sehen kann, wenn er nach hinten oder in einen Rückspiegel blickt. So kann der Fahrer an dem Zeigerelement jederzeit den Füllungsgrad der Presskammer bzw. die Stellung des Gehäuseteils ablesen und den Betrieb der Ballenpresse daran angepasst steuern.

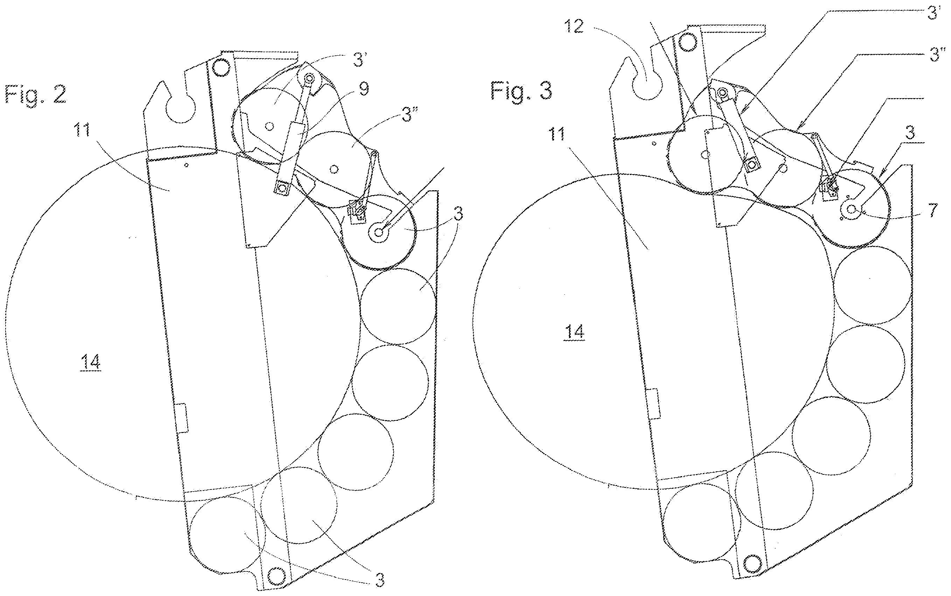

Die Fig. 2 und 3 zeigen jeweils schematische Ansichten des hinteren Gehäuseteils 11 mit fertigem bzw. teilfertigem Pressballen 14 gemäß einer geringfügig abgewandelten Ausgestaltung der Erfindung. Während bei der Ausgestaltung der Fig. 1 der Rahmen 8 geradlinige Streben umfasst, welche die Achsen der Walzen 3', 3" mit der Achse 7 verbinden, und die achsnähere 3" der beiden Walzen 3', 3" einen kleineren Durchmesser als die anderen Walzen hat, um eine im wesentlichen zylindrische Form der Presskammer 13 zu gewährleisten, sind bei der Ausgestaltung der Fig. 2 und 3 die schwenkbaren Walzen 3', 3" mit den fest am hinteren Gehäuseteil 11 gelagerten Wellen 3 baugleich, und die Achsen der Wellen 3' , 3" liegen mit der Achse 7 nicht auf einer Linie. Die Arbeitsweise der Ballenpresse gemäß dieser Ausgestaltung ist die gleiche wie mit Bezug auf Fig. 1 beschrieben.

Das Prinzip der Erfindung ist selbstverständlich nicht auf Ballenpresse beschränkt, bei denen die Presskammer, wie in den Fig. 1 bis 3 gezeigten, an ihrem Umfang im Wesentlichen vollständig von Walzen begrenzt ist. Die Walzen können auch jeweils weit voneinander beabstandet sein und die Zwischenräume zwischen den Walzen überbrückende Ketten oder Bänder, insbesondere an sich bekannte Stabketten, tragen.

Die oben angesprochene Druckreduzierung zu Beginn eines Ballenbindevorgangs kann, wenn die Stellglieder als ideal dicht und verlustfrei angesehen werden, in einem kontrollierten Ablassen von Druckfluid aus den Stellgliedern bestehen.

Wenn die Stellglieder verlustbehaftet sind, muss, um während der Ballenbildung den Pressdruck konstant auf einem Sollwert zu halten, fortlaufend in kontrolliertem Umfang Hydraulikfluid unter Druck zu den Stellgliedern nachgeführt werden.

Im einfachsten Fall obliegt dem Fahrer, den Druck in den Hydraulikzylindern zu überwachen und ggf. nachzuregeln, und die Benutzerschnittstelle 22 hat zu diesem Zweck ein Anzeigefeld, welches den momentan in den Hydraulikzylindern herrschenden Druck anzeigt. Jeweils zu Beginn der Ballenerzeugung beaufschlagt der Fahrer die Hydraulikzylinder 9 und 19 mit hohem Druck, um einen ausreichenden Pressdruck und eine feste Zuhaltung des Gehäuses zu gewährleisten. Fällt der Druck in dem einen oder anderen der Hydraulikzylinder 9, 19 unter einen vorgegebenen Mindestwert, so regelt der Fahrer ihn über das Ventil 16 nach, eventuell in Folgte eines Warnsignals von der Benutzerschnittstelle 22. Wenn der Drehwinkelsensor 20 oder der Schalter 24 erfasst, dass der Rahmen 8 seine Anschlagstellung erreicht hat, so wird auch dies an der Benutzer-Schnittstelle 22 angezeigt. Ab diesem Zeitpunkt regelt der Fahrer den Druck in den Hydraulikzylindern 9, 19 nicht mehr nach. Der Pressdruck nimmt dadurch allmählich ab, und die weitere Aufnahme von Pressgut führt dazu, dass der Pressballen allmählich die Gehäuseteile 10, 11 auseinander drückt. Sobald dies vom Schalter 25 erfasst und an der Schnittstelle 22 angezeigt wird, weiß der Fahrer, dass es Zeit ist, den Ballen zu binden. Aufgrund des verminderten Pressdrucks kann das Bindematerial ohne Schwierigkeiten um den Ballen gewickelt werden.

Im komfortableren Fall steuert die Steuereinheit 21 den Druck in den Hydraulikzylindern automatisch so lange auf einen vorgegebenen Wert, bis der Rahmen 8 seine Anschlagstellung erreicht hat. Wenn dies der Fall ist, spätestens aber wenn der Schalter 25 erfasst, dass die Gehäuseteile 10, 11 auseinander zu schwenken beginnen, erzeugt die Schnittstelle 22 ein Warnsignal, das den Fahrer auffordert, den Ballenbindevorgang auszulösen.

### Bezugszeichen

- 1: Zugmaschine
- 2: Ballenpresse
- 3: Walzen
- 4: Pickup-Trommel
- 5: Schneideinrichtung
- 7: Achse
- 8: Rahmen
- 9: Stellglied
- 10: vorderes Gehäuseteil
- 11: hinteres Gehäuseteil
- 12: Scharnier
- 13: Presskammer
- 14: Pressballen
- 16: Wegeventil
- 17: Hydraulikpumpe
- 19: Stellglied
- 20: Drehwinkelsensor
- 21: Steuereinheit
- 22: Benutzerschnittstelle
- 23: Vorrat
- 24: Schalter
- 25: Schalter

## Patentansprüche

1. Rundballenpresse mit wenigstens zwei eine Presskammer (13) begrenzenden und gegeneinander in einem Freiheitsgrad bewegbaren Ballenformungselementen (3, 3', 3"), wobei die Presskammer (13) an ihrem Umfang im Wesentlichen vollständig von Walzen (3, 3', 3") begrenzt ist, und einem Sensor (20; 24; 25) zum Erfassen der Relativposition der Walzen (3, 3', 3") zueinander, **dadurch gekennzeichnet, dass** ein Pressdruckregelsystem (21, 16) zum Regeln des von den Walzen (3; 3', 3") ausgeübten Drucks an den Sensor (20; 24; 25) gekoppelt ist, um unterschiedliche Pressdrücke einzustellen, je nachdem ob die Relativposition eine vorgegebene Grenzposition überschreitet oder nicht.

2. Rundballenpresse nach Anspruch 1, **dadurch gekennzeichnet, dass** die Walzen (3; 3', 3") durch ein Gelenk (7; 12) miteinander schwenkbar verbunden sind und der Sensor (20; 24; 25) ein dem Gelenk (7; 12) zugeordneter Winkelsensor ist.

3. Rundballenpresse nach Anspruch 2, **dadurch gekennzeichnet, dass** die Walzen (3, 3', 3") in zwei zum Ausgeben eines Ballens gegeneinander schwenkbaren Gehäuseteilen (10, 11) angeordnet sind und dass das Gelenk (12) die beiden Gehäuseteile miteinander verbindet.

4. Rundballenpresse nach Anspruch 2, **dadurch gekennzeichnet, dass** sie zwei zum Ausgeben eines Ballens gegeneinander schwenkbare Gehäuseteile (10, 11) umfasst und dass die zwei gegeneinander bewegbaren Walzen (3; 3', 3") in einem (11) der beiden Gehäuseteile angeordnet sind.

5. Rundballenpresse nach Anspruch 4, **gekennzeichnet durch** Mittel (20, 21)zum Stoppen der Gutzufuhr zu der Presskammer (13), wenn die Relativposition eine vorgegebene Grenzposition überschreitet.

6. Rundballenpresse nach Anspruch 1, **dadurch gekennzeichnet, dass** das Pressdruckregelsystem (9, 16, 19, 22) wenigstens einen zwischen den zwei Walzen (3; 3'; 3") wirkenden Hydraulikkolben (9; 19) und Mittel (21) zum Regeln des in dem Hydraulikkolben (9; 19) herrschenden Drucks anhand der von dem Sensor (20; 24; 25) erfassten Relativposition umfasst.

7. Rundballenpresse nach einem der vorhergehenden Ansprüche, **dadurch gekennzeichnet, dass** die Walzen (3; 3'; 3") jeweils mehrere in einem Rahmen (10; 11; 8) drehbar gehaltene Presswalzen umfassen.

8. Rundballenpresse nach einem der vorhergehenden Ansprüche, **dadurch gekennzeichnet, dass** sie einen Fahrantrieb und eine Fahrerkanzel umfasst und dass an der Fahrerkanzel eine Anzeigeeinrichtung (22) für ein Ausgangssignal des Sensors (20; 24; 25) vorgesehen ist.

## Claims

1. A round bale press comprising at least two bale forming elements (3, 3', 3") which delimit a pressing chamber (13) and which are moveable relative to each other in a degree of freedom, wherein at its periphery the pressing chamber (13) is substantially completely delimited by rollers (3, 3', 3"), and a sensor (20; 24; 25) for detecting the relative position of the rollers (3, 3', 3") relative to each other, **characterised in that** a pressing pressure regulating system (21, 16) for regulating the pressure exerted by the rollers (3, 3', 3") is coupled to the sensor (20; 24; 25) to set different pressing pressures depending on whether the relative position exceeds or does not exceed a predetermined limit position.

2. A round bale press according to claim 1 **characterised in that** the rollers (3, 3', 3") are pivotably connected together by a joint (7; 12) and the sensor (20; 24; 25) is an angle sensor associated with the joint (7; 12).

3. A round bale press according to claim 2 **characterised in that** the rollers (3, 3', 3") are arranged in two housing portions (10, 11) pivotable relative to each other for the discharge of a bale and that the joint (12) connects the two housing portions together.

4. A round bale press according to claim 2 **characterised in that** it includes two housing portions (10, 11) pivotable relative to each other for the discharge of a bale and that the two mutually moveable rollers (3, 3', 3") are arranged in one (11) of the two housing portions.

5. A round bale press according to claim 4 **characterised by** means (20, 21) for stopping the feed of material to the pressing chamber (13) when the relative position exceeds a predetermined limit position.

6. A round bale press according to claim 1 **characterised in that** that pressing pressure regulating system (9, 16, 19, 22) includes at least one hydraulic piston (9; 19) operative between the two rollers (3, 3', 3") and means (21) for regulating the pressure prevailing in the hydraulic piston (9; 19) on the basis of the relative position detected by the sensor (20; 24; 25).

7. A round bale press according to one of the preceding claims **characterised in that** the rollers (3, 3', 3") respectively include a plurality of pressing rollers held rotatably in a frame (10; 11; 8).

8. A round bale press according to one of the preceding claims **characterised in that** it includes a travel drive and a driver's cab and that provided at the driver's cab is a display device (22) for an output signal of the sensor (20; 24; 25).

## Revendications

1. Presse à balles rondes comprenant au moins deux éléments de mise en forme de balles (3, 3', 3'') délimitant une chambre de pressage (13) et déplaçables l'un par rapport à l'autre selon un degré de liberté, la chambre de pressage (13) étant sensiblement complètement délimitée à sa périphérie par des rouleaux (3, 3', 3''), et comprenant un capteur (20 ; 24 ; 25) pour détecter la position relative des rouleaux (3, 3', 3'') les uns par rapport aux autres, **caractérisée en ce qu'**un système de régulation de la pression de pressage (21, 16) destiné à réguler la pression exercée par les rouleaux (3 ; 3', 3'') est couplé au capteur (20 ; 24 ; 25) pour régler différentes pressions de pressage selon que la position relative dépasse ou non une position limite prédéfinie.

2. Presse à balles rondes selon la revendication 1, **caractérisée en ce que** les rouleaux (3 ; 3', 3'') sont reliés entre eux de manière pivotante par une articulation (7 ; 12), et **en ce que** le capteur (20 ; 24 ; 25) est un capteur d'angle associé à l'articulation (7 ; 12).

3. Presse à balles rondes selon la revendication 2, **caractérisée en ce que** les rouleaux (3, 3', 3'') sont disposés dans deux parties de carter (10, 11) pouvant pivoter l'une par rapport à l'autre pour faire sortir une balle, et **en ce que** l'articulation (12) relie entre elles les deux parties de carter.

4. Presse à balles rondes selon la revendication 2, **caractérisée en ce qu'**elle comprend deux parties de carter (10, 11) pouvant pivoter l'une par rapport à l'autre pour faire sortir une balle, et **en ce que** les deux rouleaux (3 ; 3', 3'') mobiles l'un par rapport à l'autre sont disposés dans une (11) des deux parties de carter.

5. Presse à balles rondes selon la revendication 4, **caractérisée par** des moyens (20, 21) pour arrêter l'amenée de produit à la chambre de pressage (13) lorsque la position relative dépasse une position limite prédéfinie.

6. Presse à balles rondes selon la revendication 1, **caractérisée en ce que** le système de régulation de la pression de pressage (9, 16, 19, 22) comprend au moins un piston hydraulique (9 ; 19) agissant entre les deux rouleaux (3 ; 3', 3'') et des moyens (21) pour réguler la pression régnant dans le piston hydraulique (9 ; 19) à l'aide de la position relative détectée par le capteur (20 ; 24 ; 25).

7. Presse à balles rondes selon l'une des revendications précédentes, **caractérisée en ce que** les rouleaux (3 ; 3', 3'') comprennent chacun plusieurs rouleaux de pressage supportés en rotation dans un cadre (10 ; 11 ; 8).

8. Presse à balles rondes selon l'une des revendications précédentes, **caractérisée en ce qu'**elle comprend un groupe propulseur et une cabine de conduite, et **en ce qu'**un dispositif d'affichage (22) pour un signal de sortie du capteur (20 ; 24 ; 25) est prévu sur la cabine de conduite.
